Europäisches Patentamt

European Patent Office

Office européen des brevets

(19)

(11) Publication number: **0 256 845**
**A2**

# EUROPEAN PATENT APPLICATION

(12)

(21) Application number: 87307128.6

(22) Date of filing: 12.08.87

(51) Int. Cl.⁴: **G 01 N 27/62**

(30) Priority: 20.08.86 GB 8620239
05.02.87 GB 8702553

(43) Date of publication of application:
24.02.88 Bulletin 88/08

(84) Designated Contracting States:
AT BE CH DE ES FR GB GR IT LI LU NL SE

(71) Applicant: STEWART HUGHES LIMITED
Chilworth Manor
Southampton Hampshire SO9 1XB (GB)

(72) Inventor: Fisher, Celia Elizabeth
135 Ramsey Road
Shirley Southampton (GB)

Forfitt, Roy
The Bungalow Brickworth Farm
Whiteparish Wiltshire (GB)

(74) Representative: Evans, David Charles et al
F.J. CLEVELAND & COMPANY 40-43, Chancery Lane
London, WC2A 1JQ (GB)

(54) Jet engine gas path condition monitoring.

(57) 1. A metohd of monitoring the condition of the Gas Turbine Engine which method comprises:

i) locating a plurality of sensors in the gas path of a jet engine,

ii) coupling each sensor to detecting means adapted to detect presence of electrostatically charged debris in the gas path,

iii) recording the rate of change of the electrostatically electrostatically induced signal in the detecting means as debris passes the same.

iv) comparing the output of said detecting means with a datum output for a healthy engine.

v) determining variations from said datum output thereby indicating the presence of a fault.

EP 0 256 845 A2

**Description**

## JET ENGINE GAS PATH CONDITION MONITORING

The present invention relates to the condition monitoring of a jet engine.

It is thought that when a jet engine is operating under stress as, for example, when the engine experiences a blade rub, chaffing or a burn, this results in the production of minute particles of debris which are electrostatically charged. Furthermore, it has been proposed that abnormal gas turbine engine conditions can be monitored by observing electrostatic signals in the exhaust which originate from the component being subjected to deterioration, so that measuring any change in the magnitude of the electrostatic activity compared with the normal datum state of the engine indicates a distressed or fault condition.

While such a system will crudely measure the overall health of the engine, it does not permit detailed analysis of the information collected for the purpose of identifying the nature and if possible the location of the fault.

The signal monitored in accordance with the present invention is the rate of change of charge measured by the electrode with respect to some datum (ground) level. This signal will hereinafter be referred to as a "pulse" signal.

The integrated pulse signal is the total amount of the charge induced in the sensor by a given incident and this is referred to hereinafter as the "charge" signal. A detailed explanation of the way in which the signal is generated on a sensor is set out in the specific description hereinafter set forth.

In one embodiment of the present invention, the plurality of sensors may be disposed about the periphery of the exhaust duct of an engine, typically to define an annular sensor array. In an alternative embodiment of the invention, a number of sensors may be incorporated in the engine either upstream or downstream of the combustor units.

The detecting means may include comparison means for comparing dominant frequencies sensed by said sensing means.

It will be appreciated that by measuring the rate of change of electrostatic charge, this permits analysis of the frequencies of the change which has not been possible hitherto.

In one aspect of the invention, the charge signal is derived by electronically integrating the pulse signal detected by the detector means.

The sensors for use in the invention may comprise an arcuate conducting surface,
mounting means for mounting said surface in the exhaust duct of an engine,
electrical insulating means serving to isolate said surface from the body of the engine, and
conducting means for connecting said surface to detecting means externally of the engine casing,
the arrangement being such that when the engine is in use, the presence of electrically charged debris in the exhaust gas stream in the duct induces a charge on said conducting surface.

The insulating means may be a layer of ceramic material provided on a surface thereof. The ceramic material of the arcuate plate is preferably juxtaposed the internal surface of the exhaust duct.

The mounting means may comprise a stud connected with said surface, insulating means carrying said stud to locate the same and to isolate the stud electrically from the surroundings. A sensor array may define a substantially cylindrical surface, each sensor extending over a circumferential portion of a segment of the duct within which the array is located.

It is not essential that the sensors are accurate; they may be planar or any other shape, preferably corresponding to the contours of the passage in which they are located.

In an alternative embodiment a sensor array may be inserted in the exhaust duct of a gas turbine engine by applying initially an insulating layer to the internal surface of said exhaust duct and applying a metallic layer to the insulating layer. Thus, the effective thickness of the assembly is markedly reduced, thereby reducing any trimming effect on the gas path within the engine under working conditions. Furthermore, vibration effects on the probe will be substantially reduced.

The use of a plurality of sensors particularly in the exhaust duct gives a plurality of signals and the time displacement and amplitude variation of the signals as recorded by the various segments of ring probe can given an indication of the general area of the engine in which the fault or problems lies.

When a fault occurs in an engine, this results in the production of charged particles which appear to be in the form of a cloud. The passage of a charged cloud of particles in the exhaust gases passing the ring probe, produces a sharply induced charge and the rate of change can be measured as the charge passes the sensor array. In its steady normal state the engine will have a particular electrostatic pattern and once this is established, any deviation from that pattern will tend to indicate the development of a fault within the engine.

Following is a description by way of example only and with reference to the accompanying drawings of methods of carrying the invention into effect.

In the drawings:-

Figure 1 is a diagrammatic view of the exhaust duct of a jet engine showing a ring sensor and a path of charged particles relative to the sensor.

Figure 2 is a graph showing the rate of change of the charge induced on the sensor as the particle moves relative to it.

Figure 3 is a perspective view of the charge sensing surface of a segmental sensor in accordance with the invention.

Figure 4 is a perspective view of the back of the probe of Figure 3.

Figure 5 is a section through a mounting using the insulating component of Figure 3

Figure 6 is a stud mounting for the probe of Figures 3 and 4.

Figure 7 is a perspective view of the exhaust duct of a jet engine showing the installation of the probes in accordance with the invention.

Figure 8 is a schematic view of the instrumentation on a Rolls Royce Viper Engine.

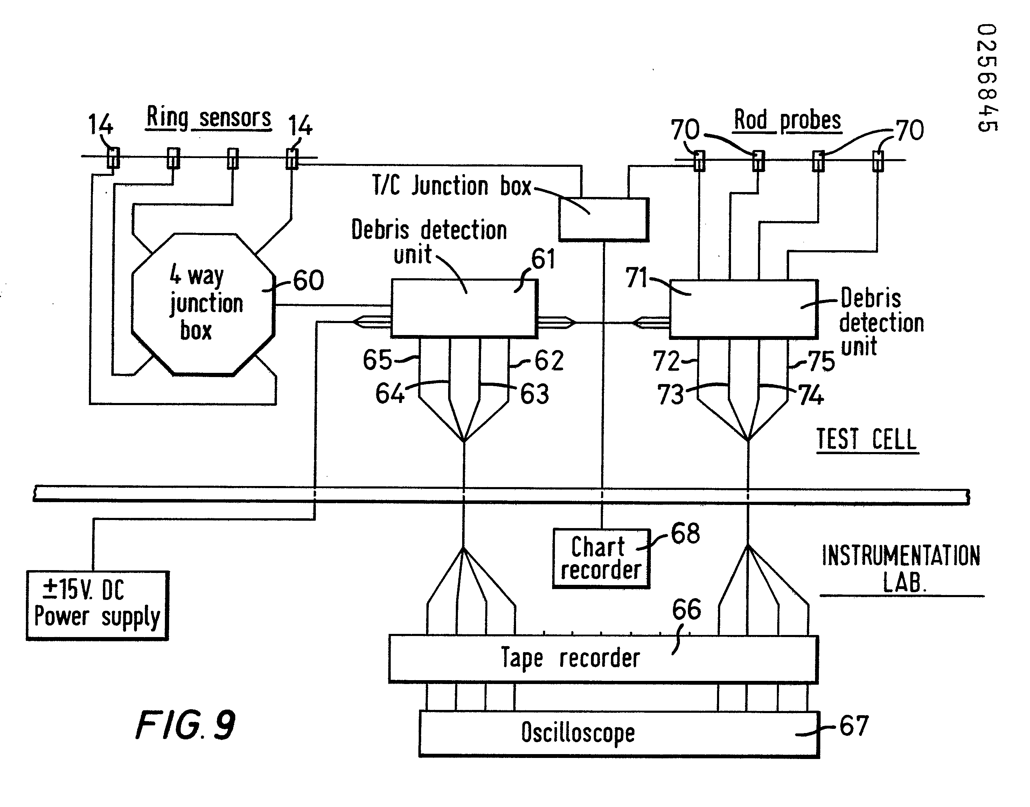

Figure 9 is a block diagram of the assembly used in the test of the engine instrumentation of Figure 8.

Figure 10 is a detail of the debris detection unit of Figure 9.

Figure 11 shows the electrostatic pattern obtained with a jet engine in its normal operating condition.

Figure 12 shows the electrostatic pattern obtained with an induced blade rub.

It is known that some jet path failures are preceded by an increase in electrical activity in the jet exhaust gases. Investigation of this phenomenon has given rise to the opinion that the electrical activity is due to individual charged particle striking any electrostatic probe placed in the gas path. Particle ingestions and simulated particle generating techniques did not, however, give similar signals. The present Applicants have realized that while measuring electrostatic activity within the gas path of the engine gives some warning of impending failure or damage, detailed analysis of the electrostatic activity and particularly the rate of change of charge as detected in accordance with the present invention, produces a series of pulses and an analysis of the frequency of those pulses gives a much more precise indication of both the nature and possible location of the fault.

As a distress condition arises within an engine, a group of charged particles 11 is expelled from the area of the distress within the engine. The group of charged particles passes as a charge cloud in the gas path and as it approaches the ring sensor 10, it induces an electrostatic charge therein. The particles 11 are moving at a high velocity and the induced charge increases rapidly as the particles approach the plane of the ring sensor 10. The rate of change of charge increases and reaches a maximum as the leading edge of the cloud enters the plane of the sensor array. Assuming that the powder cloud has approximately uniform charge per unit length, the rate of change of charge decreases and reaches zero when the centre of the cloud is coincident with the centre of the sensor array. The maximum charge has then been induced. As the cloud passes by, the rate of change of charge continues to fall as the leading edge of the cloud is leaving the vicinity of the sensors and reaches a minimum when the trailing edge leaves the sensors again indicating a rapid rate of change of charge. The signal level then returns to the mean level due to the discharge time constant in the electronics associated with the means for sensing the charge induced on the electrodes. In some cases the signal between the two peaks is not uniform showing almost a point of inflection. This mainly occurs for ring sensor arrays which is wider than any other sensors where the charge cloud is large and is not uniformally dispersed thereby causing some momentarily rate of change of charge.

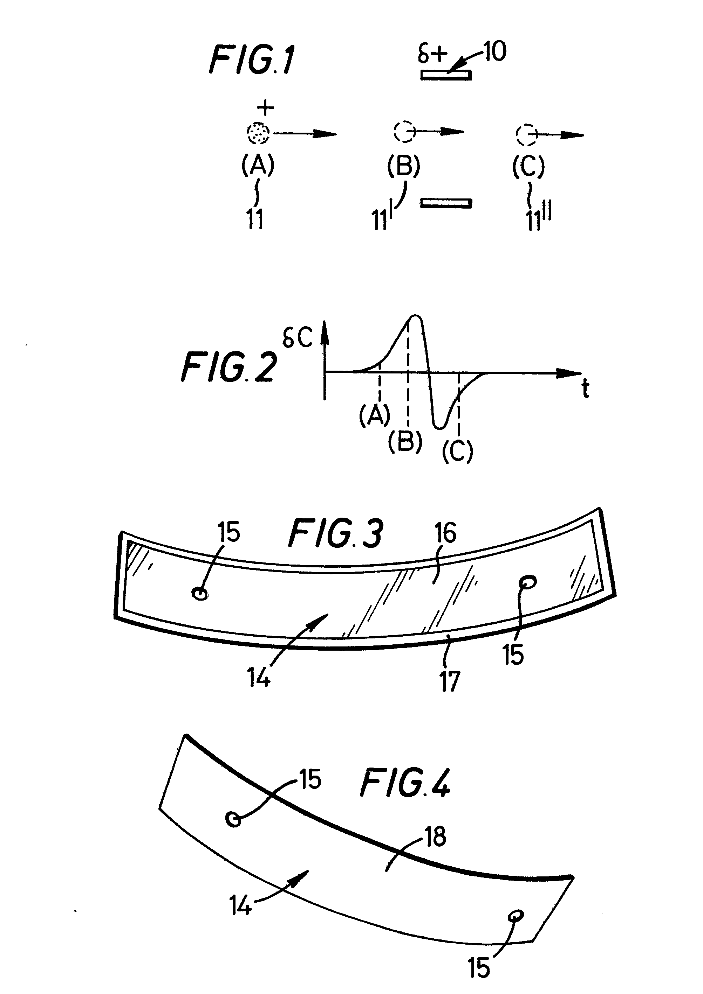

The charge signal as hereinbefore defined is the integrated pulse signal and shows the amount of charge induced on the sensor and hence the maximum of the charge signal should coincide with zero crossing of the pulse signal (no rate of change of charge). There is evidently a small time lag between the pulse and the charge signals and this is due to the charge constant of the integrator circuit and does not detract from the usefulness of the signal. As the cloud of powder enters the vicinity of the sensors, the amount of charge induced thereon increases and reaches a maximum where the centre of the cloud is at the centre of the sensor. This corresponds to the first half of the bi-polar pulse signal. As the cloud leaves the sensor, the amount of charge induced decreases and returns to zero and when the cloud is in position B with respect to the ring sensor, the quantum of charge induced on the electrode is at its maximum as shown by point B in Figure 2B.

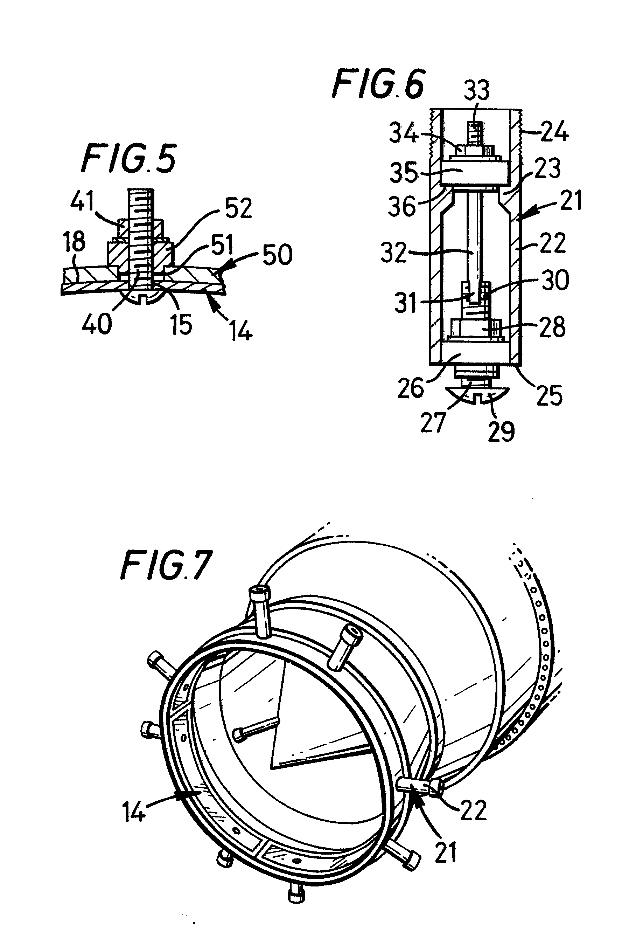

A typical series of sensors as arranged in the exhaust gas duct of a jet engine is shown in Figure 7 and the individual sensors are shown in Figures 3 and 4. In particular configuration shown in Figure 7, four segmental sensors are employed. Each sensor comprises an arcuate plate 14 having a pair of arcuately spaced holes 15. The face 16 of plate 14 is polished to provide a charge receiving surface and the periphery 17 and the back 18 (see Figure 4) are covered with a coating of a ceramic, electrically insulating material.

Each plate 14 is secured to the engine casing 20 by means of a securing stud assembly 21. The securing stud assembly is shown in Figure 6 and comprises a generally cylindrical sleeve 22 which is provided on its internal surface towards a first end with an annulus 23. The external surface of the first end is threaded at 24 and the second end 25 of stud assembly 21 is provided with an annular recess (not shown). The second end is adapted to accommodate an insulating member 26 formed of a ceramic material and having a central bore adapted to accommodate a metal screw 27 adapted to be secured by nut 28 to ceramic member 26. Bolt 27 is provided with an enlarged slot 30 at its threaded end and is adapted to receive a flatten portion 31 of stud 32. Stud 32 is generally cylindrical and is threaded at its first end 33 and is adapted to be engaged by nut 34 which serves to clamp a further ceramic block 35 between the shoulder 36 defined by constriction 23 against ceramic member 26. The head 29 of bolt 27 serves to retain plate 16 in closely spaced relationship with the casing, but insulated therefrom while the bolt 27 and its associates stud 32 serves to provide a means of electrical connection whereby the end 33 can be electrically connected to a conductor for connection to detection sensing and analytical equipment.

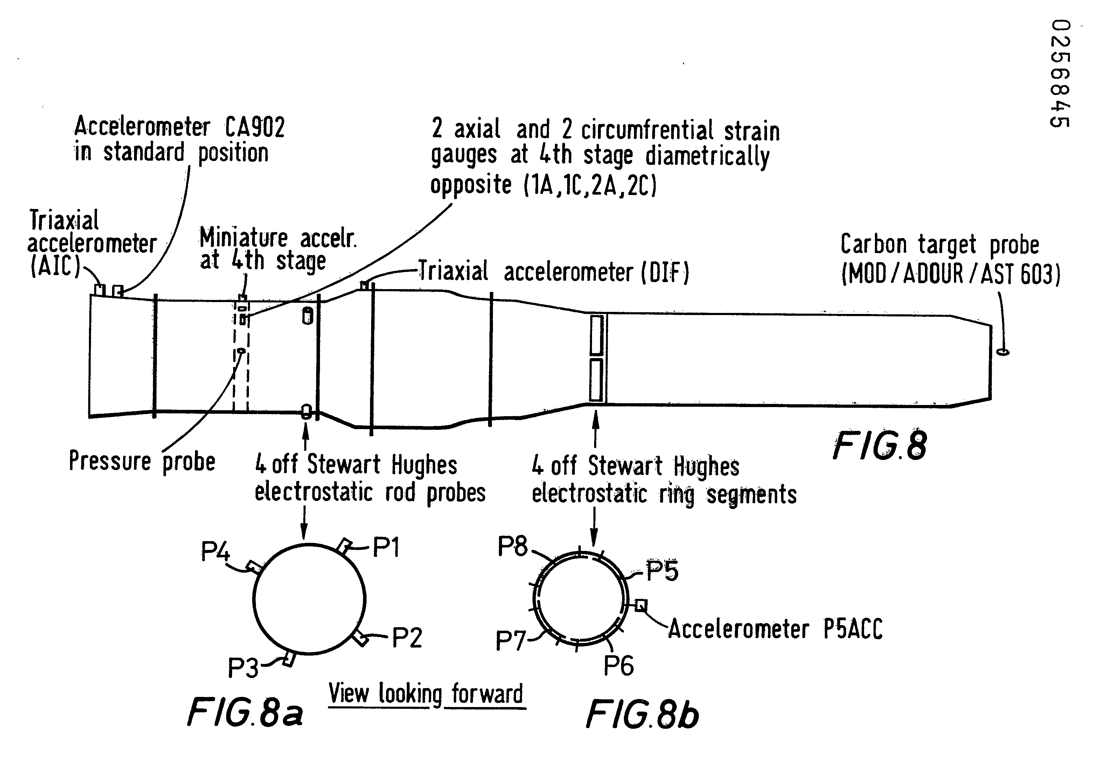

The ring sensor in accordance with the present invention may also be used in conjunction with rod sensors which are provided in the turbo fan casing for analysis of any debris present within the turbine casing itself. (See Figures 8 and 8a).

The ring sensors 18 are connected via a four way function box 60 to supply signals to a debris detection unit 61. The debris detection unit has a channel corresponding to each ring sensor and provides four outputs 62, 63, 64 and 65 each of which are connected to a tape recorder 66 and subsequently to an oscilloscope 67 to provide a visual indication of the output of the components. The debris detection unit also provides an output to a chart recorder 68.

Rod sensors 70 are also connected to a debris detection unit 71 and the various putputs 72, 73, 74 and 75 are connected to tape recorder 66 and 67 and are switchable to chart recorder 68.

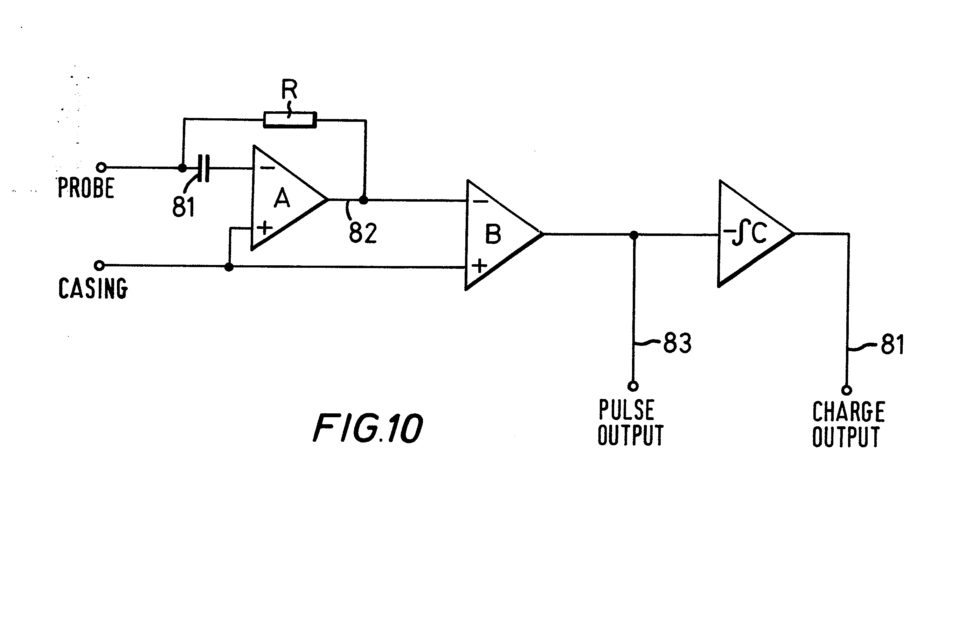

The debris detection unit 61 comprises a current input (trans-resistant) amplifier A which is an AC coupled amplifier with the gains set by resistor R (see Figure 10). Different types of sensor installation require different settings of R, the sensor signal passes also via capacitor 81. The non-inverting terminal is connected to the engine casing. The output signal at 82 passes to the input to a differential amplifier B which removes common mode signals present between the engine casing and the equipment earth. The differential amplifier output is a signal representing the rate at which the charge enters or leaves the sensor region. This is the pulse signal shown in Figure 2 which is then passed to a pulse outlet socket 83 for subsequent processing or tape recording. The pulse signal may also be passed to an integrating stage C, which for a ring sensor, the time integral of the pulse signal represents the amount of charge induced on the sensor. This signal is available via a further output 84 as a "charge" output. While this signal does not have the same physical significance for rod and ring sensors, the low pass filtering action for the integrator aids noise and interference removal.

The integrator C is selectable between 1 and 10 seconds and this provides a smoothing charge output which can be separately monitored.

The arrangement illustrated in Figures 7 and 8 of the drawings show inter alia the assembly of segmental sensors in the exhaust duct of a Rolls Royce Viper engine.

The test engine was fitted with a CA902 accelerometer mounted in the standard position. Extra instrumentation fitted by Rolls Royce to try to detect the faulty blade was as follows:-

a) Four strain gauges - Two axial and two circumferential (1A, 1C, 2A, 2C) mounted on the casing above the fourth stage disc.

b) One stick-on minature accelerometer at the 4th stage.

c) One Rolls Royce carbon target probe mounted on the jet pipe.

d) One pressure probe mounted in the casing above the fourth stage rotors.

The equipment mounted in accordance with the present invention comprised:-

e) Four rod sensors inserted in the gas stream at the rear of the compressor casing, P1, P2, P3, P4. The rod sensor were 9mm in diameter, hollow stainless steel round tipped probes. They were nominally equally spaced circumferentially between the straightener vanes after the compressor. The immersion depth was half the length of the straightener vanes.

f) A four segment electrostatic ring probe as illustrated in Figure 7.

g) Two thermocouples, one on a rod probe connection box and one on an outer connection of the ring probe. These were used to establish the temperature at which the probe electrical connections would have to operate.

h) Two tri-axial accelerometer mounted on the front and rear compressor casing.

i) An accelerometer mounted on one of the ring sensor connectors to assess the vibration experienced by the ring sensor assembly of Figure 7.

The engine was first run in standard form to give a datum record for the detectable signals. The test procedure was as follows:-

a) Start engine to idle, instrumentation check.

b) Carry out slow acceleration/deceleration at approximately 30% rpm per minute between 40% and 104% rpm.

c) Steady running check at 80% rpm.

d) Slow acceleration/decleration repeated twice more.

After the initial datum tests, the engine was stripped and rebuilt with a faulty blade in a fourth stage compressor rotor. The tang root of the blade was partially cut through to try and simulate the effects of cracking. The intention was that the blade would be sufficiently faulty to cause it to lean and produce a tip rub at some stage of the engine accleration. The root was not completely cut through as this would cause loss of the blade from the disc. The test programme was as follows:-

a) Start engine to idle. Instrumentation check.

b) Carry out slow acceleration/decleration at approximately 30% rpm/min between 40% and 104% rpm. Identify speeds at which the blade rubs.

c) Slow acceleration from 40% to 104%.

d) Two minutes steady state running at 104%, 95%, 90%, 85%, 80%, 70%, 60%, 50%, 40%, rpm.

e) Slow acceleration/deceleration between 40% and 104% rpm.

f) Engine shutdown.

After the test the engine was stripped to determined whether the blade had rubbed and to assess the amount of damage.

During the test the thermocouples monitored temperatures of 250°C on the rod sensor shield and 325°C on the ring sensor shield. The cables and connections have been selected so as not to be damaged by the high temperatures involved.

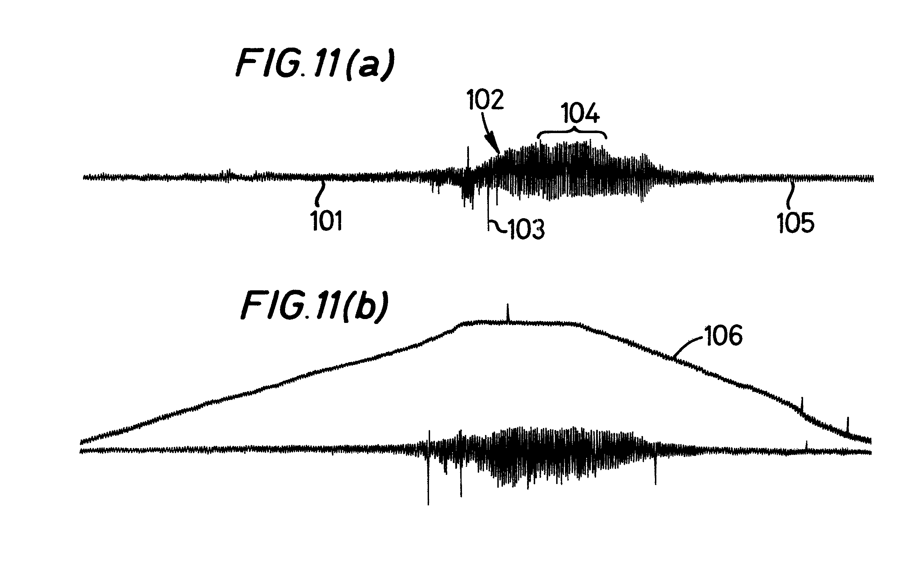

During start-up of the engine during the datum test, the ring sensor measured a lot of electrostatic activity including regular frequency pulses corresponding to ignitors operating. The signal level reached about 1.75V maximum during the start-up and this high level of activity remained until the engine had reached about until the engine had reached about 25% speed. The background level then settled down to about 30mt peak to peak and increased to about 40mV peak to peak at engine idle, i.e. 40% rpm. As the engine accelerated, the background level gradually increased. At approximately 85% speed, it was about 70mV peak to peak. Above this speed the peak to peak amplitude increased more rapidly reaching 120mV at 93% rpm and about 200mV at 104% rpm. As the engine speed decreased, the pattern was reversed and the background level returned to about 40mV peak to peak at engine idle. This is shown clearly in the chart recorded trace of Figure 11. Each recording A and B is a record of the output from a single plate 14 of the ring sensor assembly shown in Figure 8. The particular trace illustrated is of the engine run-up to maximum speed and then throttled back. The initial signal 101 obtained during the initial run-up period of 40 to 80% power shows very few vibrations and little sign of engine stress. As the power exceeds 80% of maximum output, the number of charged particles in the exhaust duct begins to increase as shown by signal in area 102. The number of specific peaks 103 are to be noted as the engine approaches full power. As the engine is throttled back, the rate of change of charge from the particles within the system decreases back to a level where they are only just detectable at 105.

The additional trace 106 on trace B is a tachometer reading which is a measure of engine speed superimposed over the detected charge pattern for the particular ring sensor.

Trace A was in respect of ring sensor 1 and trace E was in respect of ring sensor 2 as set out in the test. Ring sensors 3 and 4 gave similar results.

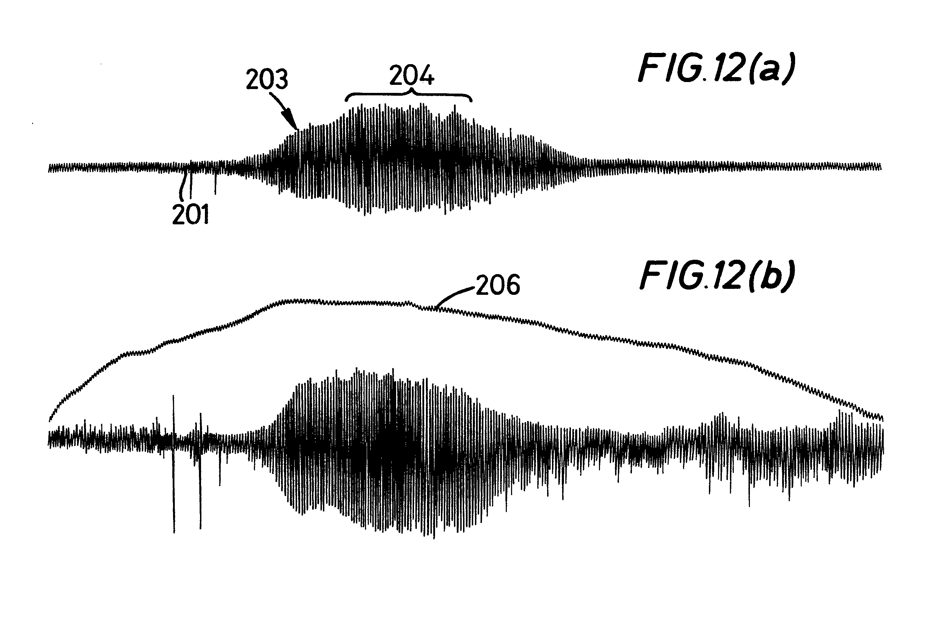

The tests with the faulty blades are shown in Figures 12a and 12b. Again, during start-up the sensorsregistered a lot of electrostatic activity including regular pulses which settled out at about 26% of engine speed and was about 60mV peak to peak at engine idle 40% rpm. The signals from the sensorswere monitored on our oscilcoscopes during the engine test as well as being tape recorded. As the engine was accelerated, this level increased gradually reaching about 120 mV at 85% speed and 160 mV at 93% speed. As the engine accelerated further, the level increased and at about 97% rpm, the amplitude of the signal was seen suddenly almost to double. As speed was increased to 104%, the signal amplitude increased to about 1 volt. This level fluctuated slightly while the engine remained at 104% rpm and decreased a small amount as the deceleration regime commenced. Then reduced sharply at about 96% of speed, gradually reducing to a background level similar to the acceleration case at 90% rpm. This pattern was repeated when second and third acceleration/deceleration cycles were carried out, although the maximum peak to peak amplitude was slightly less than for the first acceleration/deceleration.

Figure 12 shows the trace for ring segments 1 and 2 similar to Figure 11.

Two points should be noted:-
1. The general signal level on the blade rub test is high throughout the cycle, for example at 40% rpm, it is 60mV on the blade rub test compared with 40mV on the datum test and at 90% rpm it is 160mV peak to peak on the rub test compared with 120mV peak to peak on the datum run. However, the rate of change of signal level between these two speeds on datum and rub tests is about the same, being a factor of 3 on the datum test and 2.7 on the rub test. The rate of change of signal level and, therefore, electrostatic charge in the exhaust cone between about 97% rpm and 104% on the rub test is much greater than the datum test, a factor of about 3 on the rub test to about 1.6 during the datum test. The increase is more sudden on the rub test indicating that perhaps the centrifugal force is sufficient to cause the blade to tilt and tub. This theory is reinforced by the fact that on deceleration the level stays high and then decreases rapidly at approximately the same speed. Furthermore, the effect was repeated on the second and third acceleration/deceleration cycles with a slightly smaller amplitude signal. In reduction of signal level can be explained by considering a blade rub situation. When the centrifugal force is sufficient to cause the faulty blade to lean it will tilt as far over as the damage route allows and rub on the engine casing. Material will be rubbed from the blade causing the sudden rise in signal level (i.e. an increase in the amount of electrostatically charged material passing through the jet pipe). As the engine decelerates and the centrifugal forces decreases, the blade is likely to return to its "normal" position in the rotor disc - hence the signal level decreases because the blade has stopped rubbing.

During the second and third acceleration/deceleration cycles the blade will again tilt when a large amount of centrifugal force is experienced, but the end of the blade has already lost some metal, so the amount of rub will be smaller and hence the signal level will be lower.

The specific traces shown in Figures 12a and 12b show that the level of distress in the period 201 is much more pronounced as the engine begins to approch 80% of power at 203, indications of distress by the amplitude of vibration is very much more noticeable. Over the peak power area, 204, the amplitude of the vibrations clearly indicates the distress in the engine and the comparison with the normal state of the engine gives an indication of the fault. The trace B is for a different segment while the superimposed curve 206 shows the tachometer reading and thus the speed of the engine. The difference in amplitude between the trace of B and trace A indicates that the debris was passing closer to segment corresponding to trace B that it was to the segment corresponding to trace A.

It follows, therefore, that a comparison of the signal outputs from the segment can give an indication of the possible location or area in which the fault or distress has occurred.

After the tests, the eingine was stripped down to determine whether the blade had actually rubbed. Examination showed that a considerable amount of metal had been removed from the blade and that the tip was blurred, but in all about 32mg of material had been removed during the engine run. Touch marks were determinable on half the casing which were mirrored on the other half of the casing and the presence of stainless steel in the gas path was picked up by the carbon target probe.

From the foregoing, it was apparent that the method of the invention gave a clear indication of distress within the engine. Furthermore, the method of detection of the use of the plurality of sensors provided the opportunity to carry out further analysis of the information. The information collected in accordance with the invention is capable of further analysis to show that during distress of the engine releasing metal particles into the gas stream, there was a change

i) in signal amplitude,
ii) in signal shape,
iii) a change in dominant harmonics,
iv) a change in standard deviation, and
v) a change in kurtosis.

A method of the invention provides for signal analysis techniques including signal averaging, fast fourier transform analysis, signal statistics, signal shape identification, threshold crossings.

The invention thus provides the opportunity to fit sensors in accordance with the present invention into both existing and new jet engines to provide an in-flight indication of any severe distress in the engine. It also provides the possibility of second line analysis whereby a flight record of the engine performance may be monitored and then at the end of the flight, may be run through a computer diagnostic for that particular engine to give an indication of the severity and location of any distresses monitored during flight. The present invention also allows for the possibility of integration of electrostatic distress sensing techniques for condition monitoring along with other techniques.

## Claims

1. A method of monitoring the condition of the Gas Turbine Engine which method comprises:-

i) locating a plurality of sensors in the gas path of a jet engine,

ii) coupling each sensor to detecting means adapted to detect pressure of electrostatically charged debris in the gas path,

iii) recording the rate of change of the electrostatically induced signal in the detecting means as debris passes the same.

iv) comparing the output of said detecting means with a datum output for a healthy engine.

v) determining variations from said datum output thereby indicating the presence of a fault.

2. A method as claimed in Claim 1, characterised in that a plurality of sensors are disposed about the periphery of the exhaust duct of an engine.

3. A method as claimed in Claim 1 or Claim 2, characterising that a number of sensors are incorporated in the engine either upstream and/or downstream of the combuster units.

4. A method as claimed in any preceding claim characterised in that the detecting means includes comparison means for comparing dominant frequencies sensed by said sensing means.

5. A method as claimed in any preceding claim characterised in that the charge signal sensed by each sensor is derived by electronically integrating the pulse signal detected by the detector means.

6. Sensors for use in a method claimed in any preceding claim characterised by a conducting surface, mounting means for mounting said surface in the exhaust duct of an engine, electrical insulating means serving to isolate said surface from the body of the engine and conducting means for connecting said conducting surface to the detecting means externally of the engine casing, whereby the presence of electrostatically charged debris in an exhaust gas stream in the duct induces an electrostatic charge on said conducting surface.

7. An sensor as claimed in Claim 6 characterised in that the insulating means is a layer of ceramic material.

8. A sensor as claimed in Claim 6 or Claim 7 characterised in that the mounting means comprises a stud electrically connected with said conducting surface, and insulating means carrying said stud to locate the same and to isolate stud electrically from the surroundings.

9. A sensor as claimed in any one of Claims 6 to 8 characterised in that the sensor is part of an array defining a substantially circumferential array of sensors closely following the adjacent surface of the duct within which the array is located.

10. A sensor as claimed in any preceding claim 6 to 9 characterised by an insulating layer applied direct to the internal surface of said exhaust duct, applying a conductinglayer to said insulating layer and providing an electrical connection between said conducting layer, through the insulating layer, externally of said duct.

0256845

FIG.1

FIG.2

FIG.3

FIG.4

0256845

FIG.5

FIG.6

FIG.7

0256845

Accelerometer CA902
in standard position

2 axial and 2 circumfrential strain
gauges at 4th stage diametrically
opposite (1A,1C,2A,2C)

Triaxial
accelerometer
(AIC)

Miniature accelr.
at 4th stage

Triaxial accelerometer (DIF)

Carbon target probe
(MOD / ADOUR / AST 603)

*FIG.8*

Pressure probe

4 off Stewart Hughes
electrostatic rod probes

4 off Stewart Hughes
electrostatic ring segments

P4

P1

P8

P5

P2

Accelerometer P5ACC

P3

P7

P6

*FIG.8a*  <u>View looking forward</u>

*FIG.8b*

FIG.9

FIG.10

PROBE

CASING

-∫C

PULSE

CHARGE

81

FIG.11(a)

FIG.11(b)

0256845

FIG.12(a)

203 204

201

FIG.12(b)

206